# EUROPÄISCHE PATENTANMELDUNG

(11) **EP 1 195 365 A1**
(43) Veröffentlichungstag der Anmeldung: **10.04.2002**
(21) Anmeldenummer: 00120664.8
(22) Anmeldetag: 21.09.2000
(51) Int. Cl.: C05C 9/02

(54) **Verfahren zur Herstellung von Methylenharnstoff-Polymeren**

(71) Anmelder: Agra Dünger GmbH, 66333 Völklingen (DE)
(72) Erfinder:
(74) Vertreter: Wunderlich, Rainer, Dipl.-Ing.

(57) **Zusammenfassung**

Die Erfindung betrifft ein Verfahren zu Herstellung von Methylenharnstoff-Polymeren unter Verwendung von Harnstoff, einem Formaldehydprodukt sowie einer Säure. Der Harnstoff wird zusammen mit dem Formaldehydprodukt in einen Mehrwellen-Extruder eingeleitet. Die Produkte werden in dem Extruder vermengt, verdichtet, erhitzt und zu einer fließfähigen Mischung aufgeschmolzen. Der aufgeschmolzenen Mischung wird Säure zugeführt, wobei eine Masse mit Methylenharnstoff-Polymeren gebildet wird. Die Masse wird anschließend ausextrudiert.

## Beschreibung

Die Erfindung betrifft ein Verfahren zur Herstellung von Methylenharnstoff-Polymeren und Verwendung von zumindest Harnstoff, einem Formaldehydprodukt sowie der Säure.

Für die Herstellung von Düngemitteln ist Harnstoff von besonderer Bedeutung, da Harnstoff einen hohen Stickstoffanteil aufweist und kostengünstig herstellbar ist. Allerdings ist es kaum wirtschaftlich reinen Harnstoff als Düngemittel einzusetzen, da reiner Harnstoff leicht auswaschbar und leicht flüchtig ist.

Es ist bekannt, Harnstoff in Verbindung mit Formaldehyd als Düngemittel einzusetzen. In dieser Verbindung, welche auch als Methylenharnstoff bezeichnet wird, sind die vorbeschriebenen negativen Eigenschaften des Harnstoffs weitgehend vermieden.

Ein gattungsgemäßes Verfahren zur Herstellung von Methylenharnstoff geht beispielsweise aus der DE-PS 24 22 238 hervor. Gemäß einem Ausführungsbeispiel wird zunächst in einem Rührbehälter freier Harnstoff mit einer Mineralsäure auf einen bestimmten pH-Wert eingestellt. Dann wird ein Vorkondensat aus Harnstoff und Formaldehyd zugegeben, wobei über eine längere Dauer eine bestimmte Temperatur eingehalten werden muss. Nach Beendigung der Reaktionen zur Herstellung des vorgesehenen Produktkondensates wird in einem nachfolgenden Verfahrensschritt das Kondensat durch Zugabe von Alkali in etwa neutralisiert. Anschließend erfolgt in einem zusätzlichen Schritt eine Filtration. Während das Filtrat wieder in den Reaktionsbehälter zurückgeführt wird, wird das feuchte Kondensat getrocknet und zu dem gewünschten Endprodukt verarbeitet.

Dieses bekannte Verfahren ist sowohl in apparativer als auch in zeitlicher Hinsicht aufwendig.

Der Erfindung liegt die **Aufgabe** zugrunde, ein Verfahren zur Herstellung von Methylenharnstoff anzugeben, welches schnell und einfach und damit kostengünstig durchführbar ist.

Erfindungsgemäß wird die Aufgabe durch eine Verfahren nach dem Patentanspruch 1 gelöst. Bevorzugte Ausführungsformen der Erfindung sind in den abhängigen Ansprüchen angegeben.

Ausgehend von dem gattungsgemäßen Verfahren ist die Erfindung dadurch gekennzeichnet,
- dass der Harnstoff mit dem Formaldehydprodukt in einen ersten Abschnitt eines Mehrwellen-Extruders eingeleitet wird,
- dass in dem ersten Abschnitt des Extruders der Harnstoff mit dem Formaldehydprodukt vermengt, verdichtet, erhitzt und dadurch zu einer fließfähigen Mischung aufgeschmolzen wird,
- dass in einem nachfolgenden Abschnitt des Extruders der aufgeschmolzenen Mischung die Säure zugeführt und mit der Mischung vermengt wird,
- dass die Mischung mit der Säure unter Bildung einer Masse mit Methylenharnstoff-Polymeren reagiert und
- dass die Masse ausextrudiert wird.

Das gesamte Verfahren kann so kontinuierlich in einer einzigen Vorrichtung durchgeführt werden. Da zudem der Verfahrensraum durch das Extrudergehäuse umschlossen ist, wird ein unerwünschtes Entweichen von Reaktionszwischenprodukten, etwa von Ammoniak, weitestgehend vermieden. Zur Herstellung des Methylenharnstoffs werden die einzelnen Reaktionsprodukte mit hoher Dosiergenauigkeit in den Extruder zugeführt. Die Vermischung des Harnstoffs mit dem Formaldehydprodukt in dem Mehrwellen-Extruder führt im Zusammenwirken mit der Verdichtung und der gleichzeitigen Erwärmung zu einer sehr homogenen Schmelze. Dies wiederum ist eine wesentliche Voraussetzung dafür, dass bei der ebenfalls mit hoher Dosiergenauigkeit erfolgten Zuführung der Säure bei ebenfalls guter Durchmischung eine schnelle und nahezu vollständige Reaktion der Ausgangsprodukte zu den gewünschten Methylenharnstoff-Polymeren erfolgt. Die Verwendung eines Mehrwellen-Extruders mit zumindest zwei Extruderwellen, welche gleich- oder gegenlaufend angetrieben sein können, ist dabei von besonderer Bedeutung. Denn erst das Zusammenwirken von miteinander kämmenden Extruderwellen führt zu einer großen Reaktionsfläche zwischen den Ausgangsprodukten. Dies ist Voraussetzung für eine nahezu vollständige Reaktion.

Mit dem erfindungsgemäßen Verfahren wird es erstmals möglich, durch die exakte Dosierung der Ausgangsprodukte in einem kontinuierlichen Verfahren sowie durch eine nahezu freie Möglichkeit der Wahl der Reaktionsparamter, hinsichtlich Vermischung, Temperatur, Verdichtung, Reaktionszeiten etc., das Reaktionsergebnis hinsichtlich der Kettenlänge der erzeugten Polymere mit hoher Genauigkeit einzustellen. So kann Methylenharnstoff je nach Wunsch mit einem hohen Anteil an kurzkettigen Methylenharnstoff-Polymeren, etwa Methylendiharnstoff oder Dimethylentriharnstoff, oder mit einem hohen Anteil an langkettigen Polymeren erzeugt werden, wie Trimethylentetraharnstoff, Tetramethylenpentaharnstoff, etc.

Gegenüber dem bisher bekannten Stand der Technik gewährt das erfindungsgemäße Verfahren also nicht nur Vorteile hinsichtlich einer kompakten, kostengünstigen Vorrichtung und einer schnellen Verfahrensdurchführung, sondern auch hinsichtlich der Herstellung einer Vielzahl von genau definierten Endprodukten.

Für eine besonders gute Verfahrensdurchführung hat es sich als vorteilhaft herausgestellt, dass als Formaldehydprodukt Paraformaldehyd eingesetzt wird.

Eine weitere Steigerung der Effizienz der Verfahrensdurchführung wird erfindungsgemäß dadurch erreicht, dass zusammen mit dem Harnstoff und dem Formaldehydprodukt Hexamethylentetramin und/oder Tetramethylendiamin in den Extruder eingeleitet und zu der Mischung aufgeschmolzen wird. Hierdurch ist ein insgesamt wasserfreier Prozess erreichbar, so dass ein Trockungsvorgang entfallen oder zumindest drastisch reduziert werden kann.

Für die abschließende Reaktion zur Herstellung des Methylenharnstoffs kann nahezu jede gebräuchliche Säure eingesetzt werden. Hinsichtlich Kosten und Reaktionssicherheit ist es vorteilhaft, dass als Säure Phosphor-, Salz- und/ oder Schwefelsäure verwendet wird.

Grundsätzlich kann das Aufschmelzen der Mischung in dem ersten Extruderabschnitt allein durch die entstehende Reibungswärme aufgrund des Transportes und der Verdichtung der Reaktionsprodukte erfolgen. Für ein schonendes und zugleich schnelles Erhitzen ist es jedoch erfindungsgemäß vorgesehen, dass das Erhitzen der Mischung in dem ersten Extruderabschnitt unter Einsatz von Heizelementen an dem Extruder erfolgt. Die Heizelemente können elektrische Heizschlaufen oder Heizwasserleitungen im oder am Extrudergehäuse entlang eines bestimmten Heizabschnittes sein. Hierdurch kann in einfacher Weise jede gewünschte Heiztemperatur und eine gezielte Temperaturführung eingestellt werden. Für das Aufschmelzen der Mischung beträgt der bevorzugte Temperaturbereich zwischen 60° C und 120° C. Für bestimmte Verfahrensvarianten können jedoch auch größere oder kleinere Temperaturen gewählt werden.

Eine besonders bevorzugte Ausführungsform des erfindungsgemäßen Verfahrens besteht darin, dass in den Extruder zusätzlich ein Wirkstoff, beispielsweise ein weiteres Düngermaterial, ein Pflanzenschutzmittel, ein Wachstumsregler etc., eingeleitet und in die Masse aus Methylenharnstoff-Polymeren eingearbeitet wird. Die Zuführung des ergänzenden Wirkstoffes erfolgt praktischerweise nach der Zuführung der Säure und nach dem die Reaktion zu Methylenharnstoff weitestgehend abgeschlossen ist. Mit dem Wirkstoff kann so zusammen mit dem Methylenharnstoff ein kombiniertes Düngemittel oder ein sonstiges Kombinationspräparat in demselben Verfahrensschritt und in derselben Vorrichtung erzeugt werden. Dies bringt insbesondere auf dem sehr preissensiblen Marktsegment der Düngemittel klare wirtschaftliche Vorteile.

Da die Materialmischung und die Masse sich noch in einem aufgeschmolzenen Zustand befindet, können die zusätzlichen Wirkstoffe dosiergenau durch einen sogenannten Sidefeeder oder eine sonstige geeignete Zuführeinrichtung eingeleitet und in dem Extruder zu einer homogenen Masse verarbeitet werden. Ohne ein Zwischenprodukt und die ansonsten damit verbundenen Transport- und Lagervorgänge kann so ein komplexes Kombinationsdüngemittel oder -präparat hergestellt werden. Die Zuführung der zusätzlichen Wirkstoffe in die noch flüssige oder fließfähige Masse aus Methylenharnstoff-Polymeren bringt zudem den weiteren Vorteil, dass die zusätzlichen Wirkstoffe ohne Bindemittel eingearbeitet werden können. Es kann somit ein Düngemittel auf Methylenharnstoffbasis mit zusätzlichen Wirkstoffen erzeugt werden, welches in ökologisch und ökonomisch sinnvoller Weise rückstandsfrei von den Pflanzen aufgenommen werden kann. Bei der Zuführung von N-, P- und/oder K-Düngersalzen ist es in bestimmten Fällen bevorzugt, zusammen mit dem Wirkstoff zusätzlich Wasser in den Extruder einzudüsen, um eine gute Lösung der Nährsalze und eine gute Vermengung und Vermischung mit dem Methylenharnstoff sicherzustellen.

Nach der Erfindung ist es weiter bevorzugt, dass die Masse am Austritt des Extruders durch ein Formwerkzeug und/oder Granulierwerkzeug geleitet wird. Somit kann unmittelbar bei Austritt der Masse aus dem Extruder das Endprodukt hinsichtlich Größe und Form eingestellt werden. Es ist dann allenfalls noch eine kurze Trocknung und gegebenenfalls ein Rondieren des Granulates erforderlich.

Hinsichtlich der Trocknung ist bevorzugt, dass die Masse nach dem Austritt aus dem Extruder mittels einer Trocknungseinrichtung getrocknet wird. Dies kann ein Trommelofen oder ein Transportband sein, welches entlang von Heizelementen verläuft.

Eine weitere bevorzugte Variante des erfindungsgemäßen Verfahrens besteht darin, dass durch Steuerung der Zuführung der einzelnen Stoffe in den Extruder die Anteile der Methylenharnstoff-Polymere mit unterschiedlicher Kettenlänge zueinander definiert eingestellt werden. Die Steuerung kann sowohl hinsichtlich einer quantitativen oder qualitativen Änderung der Zuführkomponenten erfolgen. Als Zuführeinrichtungen können über steuerbare Elektromotoren angetriebene Sidefeeder-, Dosierpumpen, etc. oder steuerbare Ventile an Zuführbehältern oder Zuführleitungen vorgesehen sein. Sämtliche Zuführungen können über einen Leitrechner gesteuert werden, so dass von zentraler Stelle aus einfach und schnell gewünschte Produktänderungen oder Produktvarianten eingestellt werden können.

Statt einer Säure kann auch ein anderer sauer reagierender Stoff, etwa ein saures Salz, verwendet werden. Ein guter H⁺ -Ionenspender ist beispielsweise Ammoniumsulfat.

Hinsichtlich der mengenmäßigen Zusammensetzung kann das Verfahren bezogen auf 100 Gewichtsprozent erzeugten Methylenharnstoffs mit 50%-90% Harnstoff, 40%-5% Formaldehydprodukt, 10%-0% Hexamethylentetramin sowie Rest Säure durchgeführt werden. Durch gezielte Veränderung der Anteile kann die Kettenlänge der Polymere und deren Anteile zueinander eingestellt werden, was sich einfach durch Versuche ermitteln läßt.

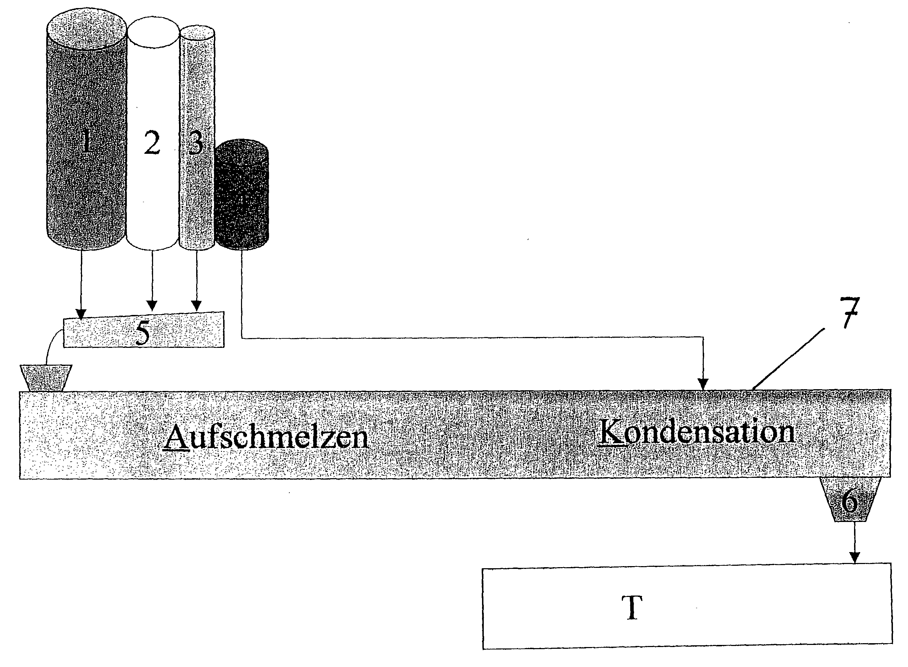

Die Erfindung wird nachfolgend anhand einer bevorzugten Ausführungsform erläutert, welche schematisch in der einzigen Figur dargestellt ist.

Diese einzige Figur zeigt die schematische Anordnung einer Vorrichtung zur Durchführung des erfindungsgemäßen Verfahrens.

Diese Vorrichtung umfasst einen Mehrwellen-Extruder 7, welcher bevorzugt gegenläufig angetrieben ist. In einem ersten Behälter 1 befindet sich Harnstoff, welcher zusammen mit Paraformaldehyd aus einem weiteren Behälter 2 sowie Hexamethylentetramin aus einem anderen Behälter 3 auf ein Wägeband 5 geleitet wird. Das Wägeband 5 dient als eine Dosiereinrichtung zum genauen mengenmäßigen Zusammenstellen der vorgenannten Ausgangsprodukte.

Über das Wägeband 5 werden die vorgenannten Ausgangsprodukte in eine Einlassöffnung des Extruders 7 eingeleitet.

In einem ersten Abschnitt A des Extruders 7 werden der Harnstoff, das Paraformaldehyd und das Hexamethylentetramin miteinander vermengt, verdichtet und aufgrund der Reibungswärme im Extruder 7 sowie durch eine Heizleistung nicht dargestellter Heizelemente aufgeschmolzen. Die Schmelztemperatur der Mischung liegt zwischen 60° und 90° C.

Die so aufgeschmolzene Mischung wird im Verlauf des Extruders 7 zu einem weiteren Abschnitt K des Extruders 7 geleitet, in welchem der aufgeschmolzenen Mischung Phosphorsäure aus einem Säurebehälter 4 zugeführt wird. Die flüssige Säure wird dabei über eine nicht näher dargestellte Einspritzeinrichtung in den Extruder 7 eingedüst, so dass in Kombination mit der Mischwirkung der zwei Extruderwellen eine gute Vermengung der Reaktionsprodukte und damit eine hohe Reaktionsoberfläche erreicht wird. So kann eine schnelle und praktisch vollständige Kondensation zu Methylenharnstoff erfolgen. Im Anschluss an die Reaktionszone innerhalb des Extruders 7 wird die Masse abgekühlt und bei Erreichen einer bestimmten Festigkeit am Austritt des Extruders 7 durch ein Formwerkzeug 6 hindurch ausextrudiert.

Abhängig von der Konsistenz der erzeugten Masse und dem gewünschten Endprodukt kann am Formwerkzeug 6 eine Graunuliervorrichtung vorgesehen sein, welche die Extrusionsstränge auf eine gewünschte Größe ablängt. Das ausextrudierte Material wird über eine bandförmige Trockungseinrichtung T geführt und dabei in einem gewünschten Grad getrocknet. Nach dem Trocknungsschritt kann das Endprodukt für bestimmte Anwendungsformen noch rondiert oder unmittelbar abgefüllt und damit zum Versand bereitgestellt werden.

Bei einer bevorzugten Verfahrensdurchführung wird die Masse aus 80% Harnstoff, 13% Paraformaldehyd, 3% Hexamethylentetramin sowie 4% Phosphorsäure zusammengesetzt.

Aus dem Vorstehenden ergibt sich, dass mit dem erfindungsgemäßen Verfahren ein besonders einfaches, kostengünstiges und dabei noch sehr genaues Verfahren zur Herstellung von Methylenharnstoff bereitgestellt wird.

## Patentansprüche

1. Verfahren zur Herstellung von Methylenharnstoff-Polymeren unter Verwendung von zumindest Harnstoff, einem Formaldehydprodukt sowie einer Säure,
**dadurch gekennzeichnet,**
- **dass** der Harnstoff mit dem Formaldehydrprodukt in einen ersten Abschnitt (A) eines Mehrwellen-Extruders (7) eingeleitet wird,
- **dass** in dem ersten Abschnitt (A) des Extruders (7) der Harnstoff mit dem Formaldehydprodukt vermengt, verdichtet, erhitzt und dabei zu einer fließfähigen Mischung aufgeschmolzen wird,
- **dass** in einem nachfolgenden Abschnitt (K) des Extruders (7) der aufgeschmolzenen Mischung die Säure zugeführt und mit der Mischung vermengt wird,
- **dass** die Mischung mit der Säure unter Bildung einer Masse mit Methylenharnstoff-Polymeren reagiert und
- **dass** die Masse ausextrudiert wird.

2. Verfahren nach Anspruch 1,
**dadurch gekennzeichnet,**
**dass** als Formaldehydprodukt Paraformaldehyd eingesetzt wird.

3. Verfahren nach Anspruch 1 oder 2,
**dadurch gekennzeichnet,**
**dass** zusammen mit dem Harnstoff und dem Formaldehydprodukt Hexamethylentetramin und/oder Tetramethylendiamin in den Extruder (7) eingeleitet und zu der Mischung aufgeschmolzen wird.

4. Verfahren nach einem der Ansprüche 1 bis 3,
**dadurch gekennzeichnet,**
**dass** als Säure Phosphor-, Salz- und/oder Schwefelsäure verwendet wird.

5. Verfahren nach einem der Ansprüche 1 bis 4,
**dadurch gekennzeichnet,**
**dass** das Erhitzen der Mischung in dem ersten Abschnitt (A) des Extruders (7) unter Einsatz von Heizelementen an dem Extruder (7) erfolgt.

6. Verfahren nach einem der Ansprüche 1 bis 5,
**dadurch gekennzeichnet,**
**dass** in den Extruder (7) zusätzlich ein Wirkstoff, beispielsweise ein weiteres Düngematerial, ein Pflanzenschutzmittel und/oder ein Wachstumsregler etc., eingeleitet und in die Masse aus Methylenharnstoff-Polymeren eingearbeitet wird.

7. Verfahren nach einem der Ansprüche 1 bis 6,
**dadurch gekennzeichnet,**
**dass** die Masse am Austritt des Extruders (7) durch ein Formwerkzeug (6) und/oder ein Granulierwerkzeug geleitet wird.

8. Verfahren nach einem der Ansprüche 1 bis 7,
**dadurch gekennzeichnet,**
**dass** die Masse nach dem Austritt aus dem Extruder (7) mittels einer Trocknungseinrichtung (T) getrocknet wird.

9. Verfahren nach einem der Ansprüche 1 bis 8,
**dadurch gekennzeichnet,**
**dass** durch Steuerung der Zuführung der einzelnen Stoffe in den Extruder (7) die Anteile der Methylenharnstoff-Polymere mit unterschiedlicher Kettenlänge zueinander definiert eingestellt werden.

10. Verfahren nach einem der Ansprüche 1 bis 9,
**dadurch gekennzeichnet,**
**dass** statt einer Säure ein saures Salz, beispielsweise Ammoniumsulfat, oder ein anderer, sauer reagierender Stoff verwendet wird.
